# EUROPÄISCHE PATENTSCHRIFT

(11) **EP 2 466 223 B1**
(45) Veröffentlichungstag und Bekanntmachung des Hinweises auf die Patenterteilung: **22.03.2017**
(21) Anmeldenummer: 11194009.4
(22) Anmeldetag: 16.12.2011
(51) Int. Cl.: F28F 9/007, F24H 9/12, F24D 11/00, F24H 9/06, F28D 20/00

(54) **Speicher zur speicherung von thermischer energie**
Storage container for storing thermal energy
Accumulateur pour le stockage d'énergie thermique

(30) Priorität: 16.12.2010 DE 202010013137 U
(43) Veröffentlichungstag der Anmeldung: 20.06.2012
(73) Patentinhaber: Sirch Tankbau-Tankservice-Speicherbau GmbH, 86700 Kaufbeuren (DE)
(72) Erfinder: Sirch, Manfred, 87600 Kaufbeuren (DE)
(74) Vertreter: Hoppe, Lars

(56) Entgegenhaltungen:
- DE-A1- 10 212 688
- DE-A1- 10 323 713
- DE-A1- 19 915 912
- DE-U- 1 792 802
- DE-U1-202006 004 957
- GB-A- 2 173 886
- US-A- 5 923 819

## Beschreibung

Die vorliegende Erfindung betrifft einen Speicher zur Speicherung von thermischer Energie, aufweisend ein von der Umgebung thermisch isoliertes, vorzugsweise zylinderförmiges, Speichervolumen, wobei das Speichervolumen mindestens einen Anschluss, insbesondere mindestens zwei Anschlüsse, zum Zu- und Ableiten eines Fluids aufweist und in überwiegend koaxialer Weise von einer Außenhülle beabstandet umgeben ist, wobei in dem zwischen dem Speichervolumen und der Außenhülle gebildeten Hohlraum ein festes Dämmmaterial angeordnet ist.

Solche Speicher, auch Wärmespeicher oder Pufferspeicher genannt, dienen der Einspeisung, Speicherung und Entnahme der in dem Fluid enthaltenen thermischen Energie, um sie in Abhängigkeit vom Bedarf einer Wärmeversorgungsanlage, beispielsweise der eines Gebäudes, zur Verfügung zu stellen. Derartige Wärmeversorgungsanlagen umfassen ein zentrales Raumheizungssystem und oftmals ein Brauchwassererwärmungssystem. Die Gewinnung von thermischer Energie und deren Einspeisung in den Speicher kann einerseits annähernd kontinuierlich erfolgen, zum Beispiel durch den Einsatz von Brennstoffkesseln für Öl, Gas, Hackschnitzel oder Pellets, andererseits, im Falle von Solarkollektoren oder Brennstoffkesseln für Scheitholz, aber auch periodisch beziehungsweise diskret. Um unabhängig von der gewählten Methode der Gewinnung der thermischen Energie deren permanente Abrufbarkeit zu ermöglichen, bedarf es eines Speichers mit einer ausreichend großen Wärmekapazität zur Speicherung der thermischen Energie. Die Kapazität des Speichers zur Speicherung von thermischer Energie bestimmt sich aus dessen Speichervolumen, dem eingesetzten Fluid und dem zur Verfügung stehenden Temperaturbereich. Gängige Speicher weisen ein Speichervolumen von 500 I bis 800 I auf und sind mit Wasser gefüllt. Für die Bereitstellung der erforderlichen Heizungs- und Brauchwasservorlauftemperatur in der Wärmeversorgungsanlage ist ein Temperaturbereich des Fluids im Speichervolumen von 50 °C bis 90 °C von Nöten, welcher mittels eines in vertikaler Richtung temperaturgeschichteten Fluids realisiert wird. In Abhängigkeit vom aktuellen Bedarf wird die benötigte thermische Energie dem Speicher entnommen. Somit wirkt der Speicher kompensierend zwischen dem Angebot an eingespeister thermischen Energie und dem dazu oftmals zeitlich und/oder betragsmäßig abweichenden Bedarf an thermischer Energie.

Um eine Speicherung von thermischer Energie in einem Speicher über einen längeren Zeitraum zu ermöglichen, bedarf es einer thermischen Isolierung des Speichers gegen die Umgebung, da sich ansonsten auf Grund der positiven Temperaturdifferenz zwischen dem Fluid und der Umgebung ein Energiestrom weg vom Fluid einstellen würde. Eine wirksame Isolierung reduziert den Verlust der thermischen Energie des Speichers an die Umgebung und erhöht somit den Wirkungsgrad der Wärmeversorgungsanlage, was schlussendlich zu einer Schonung der natürlichen Ressourcen und Reduzierung der Heizkosten führt.

Zur Vermeidung von Kältebrücken sind bei der Isolierung von Speichern mehrere Aspekte zu berücksichtigen. Die großflächigen Bereiche des Speichervolumens sind durch festes, zumeist mattenartiges Dämmmaterial, welches den Hohlraum zwischen dem Speichervolumen und der Außenhülle des Speichers einnimmt, einfach und wirkungsvoll isolierbar. Solche Dämmmatten bestehen in der Regel aus Glaswolle, Steinwolle, Styropor, Kork oder ähnlichen Materialien mit einer geringen Wärmeleitfähigkeit. Gattungsgemäße Speicher weisen aber auch diverse Anschlüsse für das Zu- und Ableiten des Fluids oder für die Anordnungen von Temperatursensoren auf. An diesen Irregularitäten gestaltet sich eine effektive Isolierung schwierig bis unmöglich, da solche Punkte notwendige Schnittstellen des Speichersvolumens mit der Wärmeversorgungsanlage bilden und demzufolge von außen zugänglich sein müssen. In der Konsequenz ist der Wirkungsgrad der Wärmeversorgungsanlage reduziert.

Gängige Speicher mit einem Speichervolumen bis etwa 800 I werden in der Regel am Herstellungsort zusammengebaut und als einstückiges Bauteil einer Wärmeversorgungsanlage an den Einsatzort geliefert und dort eingebaut. Die meisten Speichervolumen werden geschweißt, einige geschraubt und wenige geklebt. Solche Arbeitsvorgänge werden am Herstellungsort oftmals von Robotern ausgeführt, was regelmäßig zu dichten Speichervolumen führt. Des Weiteren sind am Herstellungsort Qualitätskontrollen einfach durchführbar. In Abhängigkeit von der Größe des Speichervolumens kann es erforderlich werden, dass das Speichervolumen am Einsatzort gebildet werden muss, da übergroße einstückige Speichervolumen die lichten Weiten von Tür- oder Deckendurchbrüchen in Rohbauten überschreiten. Am Einsatzort werden die für den Zusammenbau des Speichervolumens notwendigen Arbeitsvorgänge manuell ausgeführt, was zu größeren Qualitätsabweichungen führen und in Abhängigkeit davon Nachbesserungsarbeiten erforderlich machen kann. Nach dem vollständigen Einbau einer komplexen Wärmeversorgungsanlage gestaltet sich der Zugang zum Speichervolumen für Nachbesserungs- oder Wartungsarbeiten auf Grund der Vielzahl von Bauteilen in Kombination mit der am Einsatzort herrschenden Platznot als schwierig bis unmöglich.

In der DE 103 23 713 A1 ist ein Wassererhitzer beschrieben, der einen als Flüssigkeitsspeicher ausgebildeten zylinderförmigen Behälter umfasst. Dieser Behälter weist Beine auf, die einen Boden des Behälters von einer Aufstandsfläche des Behälters beabstanden. Der Boden weist eine Entleerungsöffnung auf. Im oberen Drittel eines Mantels des Behälters ist eine weitere Öffnung vorgesehen, an der mittels eines Flansches ein Brenner oder ein Wärmepumpenmodul befestigt ist.

Der Erfindung liegt daher die Aufgabe zu Grunde, einen Speicher der eingangs genannten Art anzugeben, der sich durch eine hohe Wartungsfreundlichkeit und eine verbesserte thermische Isolierung gegen die Umgebung auszeichnet.

Zur Lösung dieser Aufgabe schlägt die Erfindung eine Speicher gemäß Anspruch 1. Der durch das Anordnen des Traggestells am Speichervolumen gewonnene, von außen zugängliche Raum, ermöglicht die Verwendung der Öffnung als Einstiegsluke in das Innere des Speichervolumens. Notwendig gewordene Wartungsarbeiten am Speichervolumen lassen sich somit von innen durchführen und ein aufwändiger Abbau von Teilen der Wärmeversorgungsanlage, um zum Speichervolumen vorzudringen, entfällt. In Folge dessen ist die Wartungsfreundlichkeit des erfindungsgemäßen Speichers deutlich erhöht. Des Weiteren lässt der erfindungsgemäß vergrößerte Raum unterhalb des Speichervolumens eine hinsichtlich der Isolierung des Speichers verbesserte Rohrführung für das Zu- und Ableiten des Fluids zu. Die Rohrführung zum Anschluss verläuft innerhalb des als Isolierung fungierenden Hohlraumes und durchsetzt die Außenhülle ausschließlich am unteren Ende des Speichervolumens. Um den Verlust an thermischer Energie möglichst gering zu halten, bedürfen insbesondere solche Bereiche einer wirkungsvollen Isolierung, die eine große Temperaturdifferenz zur Umgebung aufweisen. Da die Temperatur des Fluids innerhalb des Speichervolumens von oben nach unten kontinuierlich abnimmt, bedarf bevorzugt der dem unteren Ende des Speichervolumens abgewandte Bereich einer optimalen, lückenlosen Isolierung, was durch die erfindungsgemäße Merkmalskombination gegeben ist. Eine lückenhafte Isolierung des Speichervolumens an dessen unterem Ende erhöht den Verlust an thermischer Energie weit weniger als eine lückenhafte Isolierung in dem dem unteren Ende des Speichervolumens abgewandten Bereich. Neben der hohen Wartungsfreundlichkeit ermöglicht der erfindungsgemäße Speicher eine verbesserte Isolierung des Speichervolumens, was mit einem höheren Wirkungsgrad der Wärmeversorgungsanlage einhergeht.

In einer besonders vorteilhaften Ausgestaltung der Erfindung ist vorgesehen, dass der Hohlraum mit Gesteinsmehl mit einer Korngröße von 1 mm bis 5 mm und/oder Pyroklasten mit einer Korngröße von 1 mm bis 5 mm gefüllt ist. Eine derartige Füllung des Hohlraumes sorgt für einen niedrigen Wärmedurchgangskoeffizienten und somit für eine wirkungsvolle Isolierung des Speichervolumens bei im Gegensatz zu standardmäßig eingesetzten Dämmmaterialien geringer Masse.

Darüber hinaus erweist es sich als besonders vorteilhaft, dass der Hohlraum eine die Außenhülle durchsetzende Einfüllöffnung zum von außen Zugänglichmachen des Hohlraums aufweist, wobei diese einen Einfüllöffnungsverschluss zum gasdichten Verschließen des Hohlraums aufweist. Die von außen zugängliche Einfüllöffnung erlaubt ein Einfüllen von fluiden oder granularen Dammmaterialien in den Hohlraum nach der Fabrikation, dem Transport zum Einsatzort und dem Einbau des Speichers, was die genannten Arbeitsabläufe erheblich vereinfacht. Im Gegensatz zu mattenartigem Dämmmaterial, das für eine lückenlose Isolierung des Speichervolumens passgenau zugeschnitten werden müssen, ermöglicht die Einfüllöffnung ein Einblasen eines granularen Dämmmaterials, beispielsweise von Gesteinsmehl und/oder Pyroklasten. Durch das Einblasen in den Hohlraum dringt das Dämmmaterial selbst in kleinste Lücken in der Isolierung vor und verschließt diese. Eine annähernd lückenlose Isolierung des Speichervolumens ist somit gewährleistet. Um die isolierende Wirkung von granularen Dämmmaterialien zu konservieren, ist ein Feuchtigkeitseintrag in den Hohlraum zu unterbinden. Dies geschieht durch das Verschließen der Einfüllöffnung nach der Füllung des Hohlraumes mittels des erfindungsgemäß vorgesehenen Einfüllöffnungsverschlusses.

Zur weiteren Verbesserung der Isolierung des Speichervolumens ist gemäß einer Ausgestaltung der Erfindung vorgesehen, dass der Hohlraum einen relativ zum Atmosphärendruck reduzierten Innendruck aufweist. Durch den erniedrigten Druck im Hohlraum ist die relative Häufigkeit der Stoßprozesse der sich im Hohlraum befindlichen Gasmoleküle reduziert und damit der Verlust an thermischer Energie in Form von Wärmeleitung.

Es erweist sich als besonders vorteilhaft, dass der Hohlraum einen die Außenhülle durchsetzenden, ein Absperrventil aufweisenden Anschluss zum Anschließen einer Vakuumpumpe und/oder einen die Außenhülle durchsetzenden Anschluss zum Anschließen eines Drucksensors aufweist. Hiermit sind eine Überprüfung und eine gegebenenfalls notwendig gewordenen Anpassung des aktuellen Innendrucks möglich. Das Absperrventil verhindert ein ungewolltes Angleichen des Innendrucks an den Atmosphärendruck.

In der Erfindung ist vorgesehen, dass das Speichervolumen mindestens zwei zueinander vertikal versetzt angeordnete Anschlüsse zum Anschließen von Temperatursensoren aufweist, wobei das Traggestell das unteres Ende des Speichervolumens relativ zum Aufstellende des Traggestells derart beabstandend ist, dass das Anschließen der Temperatursensoren durch die Außenhülle nahe der Öffnung erfolgen kann. Am Speichervolumen angeordnete Temperatursensoren sind zur Regelung der Wärmeversorgungsanlage zwingend notwendig. Da die Temperatursensoren zumeist gute Wärmeleiter sind, einerseits in direktem Kontakt zum Fluid stehen und andererseits eine wärmeleitende Verbindung zu der Umgebung herstellen, fungieren sie grundsätzlich als Kältebrücke zwischen dem Fluid und der Umgebung. Die erfindungsgemäße Einbettung der Temperatursensoren in die außenhüllenseitig lückenlose Isolierung minimiert den Verlust an thermischer Energie. Zum Anschließen der Temperatursensoren erfolgt eine Durchsetzung der Außenhülle lediglich nahe der Öffnung und somit in einem Niedrigtemperaturbereich des Speichervolumens, was den Energieverlust weiter reduziert und zu einem höheren Wirkungsgrad der Wärmeversorgungsanlage beiträgt.

Des Weiteren erweist es sich erfindungsgemäß als besonders vorteilhaft, dass das Speichervolumen eine sich innerhalb des Speichervolumens vertikal erstreckende, mit wenigstens einem Anschluss zum Zuleiten des Fluids verbundene Zuleitevorrichtung aufweist, wobei die Zuleitevorrichtung mehrere zueinander vertikal versetzt angeordnete Zuleiteöffnungen aufweist, wobei die Zuleiteöffnungen entgegen der Richtung des Aufstellendes des Traggestells orientiert sind. Eine derartige Anordnung der Zuleiteöffnungen erlaubt ein Zuleiten des Fluids in das Speichervolumen, ohne die im Speichervolumen vorherrschende temperaturgeschichtete Fluidverteilung wesentlich zu stören, da das Fluid nach dem Verlassen der Zuleitevorrichtung durch die der Richtung der Strömungsgeschwindigkeit des Fluids entgegengesetzt wirkende Gravitationskraft sofort verzögert wird.

Insbesondere ist gemäß einer Ausgestaltung der Erfindung vorgesehen, dass die Zuleitevorrichtung aus Rund- oder Quadratrohren gebildet ist und die Querschnittsfläche jeder Einzelnen der Zuleiteöffnungen größer oder gleich der Querschnittsfläche der Zuleitevorrichtung ist. Hiermit werden beim Zuleiten des Fluids in das Speichervolumen Düseneffekte und daraus resultierende Strömungen, welche das temperaturgeschichtete Fluid im Speichervolumen durchmischen könnten, unterdrückt.

In einer besonderen Ausgestaltung der Erfindung weist der Speicher eine vertikale Ausdehnung größer 1,5 m auf und ist in Einbausituation das Auge einer Treppe, insbesondere eines Treppenhauses, durchsetzend. Die Verwendung des Speichers als Treppenauge ermöglicht neben der Stabilisierung der Treppenstatik eine Reduzierung des Platzbedarfs der Wärmeversorgungsanlage in einem Heizungskeller bei gleichzeitiger Erweiterung des zu Verfügung stehenden Speichervolumens. Insbesondere bei einer jahreszeitenübergreifenden Speicherung von thermischer Energie bedarf es eines erheblichen Speichervolumens. Beispielsweise ist in einem Treppenhausauge eines mehrstöckigen Hauses ein Speichervolumen von 500 l bis 150000 l anordnbar.

Die Erfindung wird in einer bevorzugten Ausführungsform unter Bezugnahme auf eine Zeichnung beispielhaft beschrieben, wobei weitere vorteilhafte Einzelheiten der Figur der Zeichnung zu entnehmen sind.

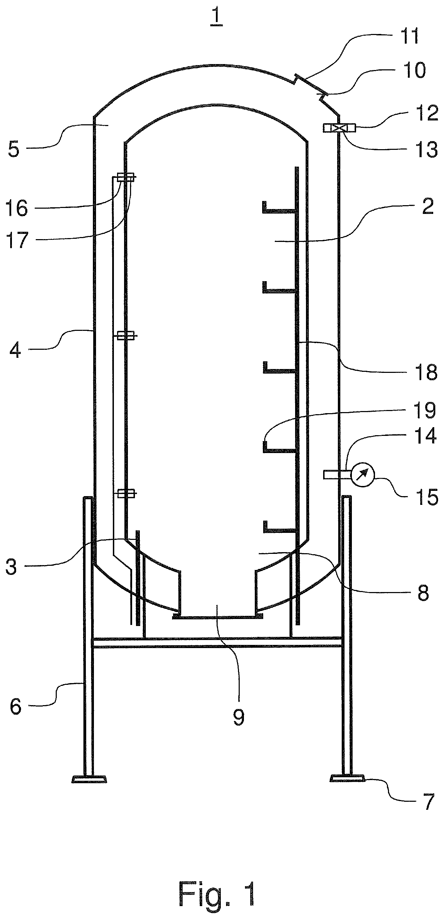

Die **Fig. 1** der Zeichnung zeigt eine schematische Frontansicht des erfindungsgemäßen Speichers.

In **Fig. 1** ist der erfindungsgemäße Speicher 1 zur Speicherung von thermischer Energie schematisch dargestellt. Dieser Speicher 1 weist ein von der Umgebung thermisch isoliertes zylinderförmiges Speichervolumen 2 auf, wobei dieses zwei Anschlüsse 3 zum Zu- und Ableiten eines Fluids aufweist. Als Fluid dient erfindungsgemäß Trinkwasser, aber auch Rohwasser, demineralisiertes oder entgastes Wasser ist einsetzbar. Des Weiteren ist das Speichervolumen 2 koaxial von einer Außenhülle 4 beabstandet umgeben, wobei in dem zwischen dem Speichervolumen 2 und der Außenhülle 4 gebildeten Hohlraum 5 ein Dämmmaterial angeordnet ist. Als Dämmmaterial erweist sich Gesteinsmehl mit einer Korngröße von 1 mm bis 5 mm oder Pyroklasten mit einer Korngröße von 1 mm bis 5 mm als besonders vorteilhaft. Zur Erleichterung des Füllvorgangs weist der Hohlraum 5 eine die Außenhülle 4 durchsetzende und somit von außen zugängliche Einfüllöffnung 10 mit einem gasdichten Einfüllöffnungsverschluss 11 auf. Um die Isolierung des Speichervolumens 2 gegen die Umgebung weiter zu verbessern, herrscht innerhalb des gasdichten Hohlraums 5 ein relativ zum Atmosphärendruck reduzierten Innendruck. Zur Evakuierung des Hohlraums 5 weist dieser einen die Außenhülle 4 durchsetzenden, ein Absperrventil 13 aufweisenden Anschluss 12 zum Anschließen einer Vakuumpumpe auf. Der aktuelle Grad der Evakuierung des Hohlraums 5 ist mittels eines Drucksensors 15, welcher an einem die Außenhülle 4 durchsetzenden Anschluss 14 angeschlossen ist, detektier- und ablesbar. Darüber hinaus weist das Speichervolumen 2 drei zueinander vertikal versetzt angeordnete Anschlüsse 16 zum Anschließen von jeweils einem Temperatursensor 17 auf. In Abhängigkeit von der Zylinderhöhe des Speichervolumens 2 kann der Einsatz von mehr als drei, vorzugsweise fünf, insbesondere bis zu neun Anschlüssen 16 sinnvoll sein. Neuerungsgemäß weist der Speicher 1 ein Traggestell 6 auf. Das Traggestell besteht im Wesentlichen aus einem Rahmen, einem mit dem Rahmen unlösbar verbundenen Tragring zur Aufnahme eines unteren Endes 8 des Speichervolumens 2 und vier mit dem Rahmen lösbar verbundene Stützen mit jeweils einem Aufstellende 7 für einen sicheren Stand auf dem Untergrund. Das Traggestell 6 überträgt die Gewichtskraft des Speichervolumens 2 mittels des Tragringes, des Rahmens und der vier Stützen auf die vier Aufstellenden 7 und somit schlussendlich auf den Untergrund. Die wirksame Länge der Stützen legt einen Abstand zwischen dem unteren Ende 8 des Speichervolumens 2 und dem Aufstellende 7 des Traggestells 6 fest. Erfindungsgemäß ist die wirksame Länge der Stützen so gewählt, dass ein Abstand zwischen dem unteren Ende 8 des Speichervolumens 2 und dem Aufstellende 7 des Traggestells 6 resultiert, der es erlaubt, dass eine ausgewachsene Person über eine am unteren Ende 8 des Speichervolumens 2 angeordnete Öffnung 9 in das Speichervolumen 2 gelangen und das Zu- und Ableiten des Fluids und das Anschließen der Temperatursensoren 17 durch die Außenhülle 4 nahe der Öffnung 9 erfolgen kann. Hierdurch erhöht sich die Wartungsfreundlichkeit des Speichers 1 bei gleichzeitiger Verbesserung der thermischen Isolierung des Speichers 1 gegen die Umgebung. Insbesondere erweist sich ein Abstand zwischen 0,3 m und 1,5 m als praxisrelevant. Um die temperaturgeschichtete Wasserverteilung im Speichervolumen 2 beim Zu- und Ableiten nicht zu stören, weist das Speichervolumen 2 eine sich innerhalb des Speichervolumens 2 vertikal erstreckende, mit einem Anschluss 3 zum Zuleiten von Wasser verbundene Zuleitevorrichtung 18 auf, wobei die Zuleitevorrichtung 18 sechs zueinander vertikal versetzt angeordnete Zuleiteöffnungen 19 aufweist, wobei die Zuleiteöffnungen 19 entgegen der Richtung des Aufstellendes 7 des Traggestells 6 orientiert sind. In Abhängigkeit von der Zylinderhöhe des Speichervolumens 2 kann die Anzahl der Zuleiteöffnungen 19 variieren. Die Zuleitevorrichtung 18 besteht aus Rundrohren, wobei deren Durchmesser zum Durchmesser der Zuleiteöffnungen 19 identisch ist. In einer alternativen Ausgestaltung der Erfindung ist die Querschnittsfläche jeder Einzelnen der Zuleiteöffnungen 19 größer als die Querschnittsfläche der Zuleitevorrichtung 18. Somit erfolgt das Zuleiten des Wassers in das Speichervolumen 2 wirbelfrei, ohne das bereits im Speichervolumen 2 befindliche Wasser zu durchmischen und die temperaturgeschichtete Wasserverteilung zu stören. Typische Durchmesser liegen zwischen 2,0 cm und 7,0 cm.

### BEZUGSZEICHENLISTE

- 1: Speicher
- 2: Speichervolumen
- 3: Anschluss
- 4: Außenhülle
- 5: Hohlraum
- 6: Traggestell
- 7: Aufstellende
- 8: Unteres Ende
- 9: Öffnung
- 10: Einfüllöffnung
- 11: Einfüllöffnungsverschluss
- 12: Anschluss
- 13: Absperrventil
- 14: Anschluss
- 15: Drucksensor
- 16: Anschluss
- 17: Temperatursensor
- 18: Zuleitevorrichtung
- 19: Zuleiteöffnung

## Patentansprüche

1. Speicher (1) zur Speicherung von thermischer Energie, aufweisend ein von der Umgebung thermisch isoliertes, zylinderförmiges Speichervolumen (2), wobei das Speichervolumen (2) mindestens einen Anschluss (3) zum Zu- und Ableiten eines Fluids aufweist und der Speicher (1) ein Traggestell (6) aufweist, wobei das Traggestell (6) die Gewichtskraft des Speichervolumens (2) auf ein Aufstellende (7) des Traggestells (6) übertragend und ein unteres Ende (8) des Speichervolumens (2) relativ zum Aufstellende (7) des Traggestells (6) derart beabstandend ist, dass eine ausgewachsene Person über eine am unteren Ende (8) des Speichervolumens (2) angeordnete Öffnung (9) in das Speichervolumen (2) gelangen und das Zu- und Ableiten des Fluids durch die Außenhülle (4) nahe der Öffnung (9) erfolgen kann, wobei die Öffnung (9) als Einstiegsluke für die Person ausgebindet ist, **dadurch gekennzeichnet, dass** der Speicher in überwiegend koaxialer Weise von einer Außenhülle (4) beabstandet umgeben ist, wobei in dem zwischen dem Speichervolumen (2) und der Außenhülle (4) gebildeten Hohlraum (5) ein festes Dämmmaterial angeordnet ist und dass das Speichervolumen (2) mindestens zwei zueinander vertikal versetzt angeordnete Anschlüsse (16) zum Anschließen von Temperatursensoren (17) aufweist, wobei durch das Traggestell (6) das unteres Ende (8) des Speichervolumens (2) relativ zum Aufstellende (7) des Traggestells (6) derart beabstandend ist, dass das Anschließen der Temperatursensoren (17) durch die Außenhülle (4) nahe der Öffnung (9) erfolgen kann.

2. Speicher (1) nach Anspruch 1, **dadurch gekennzeichnet, dass** der Hohlraum (5) mit Gesteinsmehl mit einer Korngröße von 1 mm bis 5 mm und/oder Pyroklasten mit einer Korngröße von 1 mm bis 5 mm gefüllt ist.

3. Speicher (1) nach Anspruch 1 oder 2, **dadurch gekennzeichnet, dass** der Hohlraum (5) eine die Außenhülle (4) durchsetzende Einfüllöffnung (10) zum von außen Zugänglichmachen des Hohlraums (5) aufweist, wobei diese einen Einfüllöffnungsverschluss (11) zum gasdichten Verschließen des Hohlraums (5) aufweist.

4. Speicher (1) nach einem der vorhergehenden Ansprüche, **dadurch gekennzeichnet, dass** der Hohlraum (5) einen relativ zum Atmosphärendruck reduzierten Innendruck aufweist.

5. Speicher (1) nach einem der vorhergehenden Ansprüche, **dadurch gekennzeichnet, dass** der Hohlraum (5) einen die Außenhülle (4) durchsetzenden, ein Absperrventil (13) aufweisenden Anschluss (12) zum Anschließen einer Vakuumpumpe und/oder einen die Außenhülle (4) durchsetzenden Anschluss (14) zum Anschließen eines Drucksensors (15) aufweist.

6. Speicher (1) nach einem der vorhergehenden Ansprüche, **dadurch gekennzeichnet, dass** das Speichervolumen (2) eine sich innerhalb des Speichervolumens (2) vertikal erstreckende, mit wenigstens einem Anschluss (3) zum Zuleiten des Fluids verbundene Zuleitevorrichtung (18) aufweist, wobei die Zuleitevorrichtung (18) mehrere zueinander vertikal versetzt angeordnete Zuleiteöffnungen (19) aufweist, wobei die Zuleiteöffnungen (19) entgegen der Richtung des Aufstellendes (7) des Traggestells (6) orientiert sind.

7. Speicher (1) nach einem der vorhergehenden Ansprüche, **dadurch gekennzeichnet, dass** die Zuleitevorrichtung (18) aus Rund- oder Quadratrohren gebildet ist und die Querschnittsfläche jeder Einzelnen der Zuleiteöffnungen (19) größer oder gleich der Querschnittsfläche der Zuleitevorrichtung (18) ist.

8. Speicher (1) nach einem der vorhergehenden Ansprüche, **dadurch gekennzeichnet, dass** der Speicher (1) eine vertikale Ausdehnung größer 1,5 m aufweist und in Einbausituation das Auge einer Treppe durchsetzend ist.

## Claims

1. A storage (1) for storing thermal energy, comprising a cylindrical storage volume (2) thermally insulated from the surroundings, wherein the storage volume (2) comprises at least one connection (3) for the supply and drainage of a fluid and the storage (1) comprises a support frame (6), wherein the support frame (6) transmits the weight of the storage volume (2) onto an erecting end (7) of the support frame (6) and spaces apart a lower end (8) of the storage volume (2) relative to the erecting end (7) of the support frame (6), in such a way that an adult person can get into the storage volume (2) through an opening (9) arranged at the lower end (8) of the storage volume (2) and the supply and drainage of the fluid can take place through the outer shell (4) close to the opening (9), wherein the opening (9) is constituted as an access hatch for the person, **characterised in that** the storage is surrounded with a spacing by an outer shell (4) in a predominantly coaxial manner, wherein a solid insulating material is arranged in the hollow space (5) formed between the storage volume (2) and the outer shell (4), and that the storage volume (2) comprises at least two connections (16) for connecting temperature sensors (17), said connections being arranged vertically offset with respect to one another, wherein, by means of the support frame (6), the lower end (8) of the storage volume (2) is spaced apart relative to the erecting end (7) of the support frame (6) in such a way that the connection of the temperature sensors (17) can take place through the outer shell (4) close to the opening (9).

2. The storage (1) according to claim 1, **characterised in that** the hollow space (5) is filled with a powdered mineral with a grain size of 1 mm to 5 mm and/or pyroclasts with a grain size of 1 mm to 5 mm.

3. The storage (1) according to claim 1 or 2, **characterised in that** the hollow space (5) comprises a filling opening (10) penetrating the outer shell (4) for the purpose of making the hollow space (5) accessible from the exterior, wherein said filling opening comprises a filling opening closure (11) for the gas-tight sealing of the hollow space (5).

4. The storage (1) according to any one of the preceding claims, **characterised in that** the hollow space (5) has a reduced internal pressure relative to the atmospheric pressure.

5. The storage (1) according to any one of the preceding claims, **characterised in that** the hollow space (5) comprises a connection (12) penetrating the outer shell (4) and comprising a shut-off valve (13) for connecting a vacuum pump and/or a connection (14) penetrating the outer shell (4) for connecting a pressure sensor (15).

6. The storage (1) according to any one of the preceding claims, **characterised in that** the storage volume (2) comprises a supply device (18) extending vertically inside the storage volume (2) and connected to at least one connection (3) for supplying the fluid, wherein the supply device (18) comprises a plurality of supply openings (19) arranged vertically offset with respect to one another, wherein the supply openings (19) are orientated opposite to the direction of the erecting end (7) of the support frame (6).

7. The storage (1) according to any one of the preceding claims, **characterised in that** the supply device (18) is formed from round or square tubes and the cross-sectional area of each individual one of the supply openings (19) is greater than or equal to the cross-sectional area of the supply device (18).

8. The storage (1) according to any one of the preceding claims, **characterised in that** the storage (1) has a vertical extension greater than 1.5 m and passes through a stairwell in the installed situation.

## Revendications

1. Réservoir (1) pour le stockage d'énergie thermique, comprenant un volume de réservoir (2) cylindrique, thermiquement isolé de l'environnement, le volume de réservoir (2) comprenant au moins un raccord (3) pour l'arrivée et l'évacuation d'un fluide et le réservoir (1) comportant un châssis de support (6), le châssis de support (6) transférant la charge pondérale du volume de réservoir (2) sur une extrémité de montage (7) du châssis de support (6) et une extrémité inférieure (8) du volume de réservoir (2) s'espaçant par rapport à l'extrémité de montage (7) du châssis de support (6) de telle manière qu'une personne adulte peut parvenir sur une ouverture (9) dans le volume de réservoir (2) disposée sur l'extrémité inférieure (8) du volume de réservoir (2) et l'arrivée et l'évacuation du fluide peuvent avoir lieu par l'enveloppe extérieure (4) près de l'ouverture (9), l'ouverture (9) étant constituée comme écoutille d'accès pour la personne, **caractérisé en ce que** le réservoir est entouré d'une manière surtout coaxiale, espacé d'une enveloppe extérieure (4), un matériau isolant fixe étant disposé dans l'espace creux (5) formé entre le volume de réservoir (2) et l'enveloppe extérieure (4) et **en ce que** le volume de réservoir (2) comporte au moins deux raccords (16) disposés verticalement décalés l'un par rapport à l'autre pour brancher des capteurs de température (17), l'extrémité inférieure (8) du volume de réservoir (2) s'espaçant à travers le châssis de support (6) par rapport à l'extrémité de montage (7) du châssis de support (6) de telle manière que le branchement des capteurs de température (17) peut avoir lieu par l'enveloppe extérieure (4) près de l'ouverture (9).

2. Réservoir (1) selon la revendication 1, **caractérisé en ce que** l'espace creux (5) est rempli de roche pulvérisée d'une granulométrie de 1 mm à 5 mm et/ou de pyroclastes d'une granulométrie de 1 mm à 5 mm.

3. Réservoir (1) selon la revendication 1 ou 2, **caractérisé en ce que** l'espace creux (5) comporte une ouverture de remplissage (10) traversant l'enveloppe extérieure (4) pour rendre accessible de l'extérieur l'espace creux (5), celle-ci comportant une fermeture de l'ouverture de remplissage (11) pour fermer l'espace creux (5) de façon étanche au gaz.

4. Réservoir (1) selon l'une quelconque des revendications précédentes, **caractérisé en ce que** l'espace creux (5) comporte une pression intérieure réduite par rapport à la pression atmosphérique.

5. Réservoir (1) selon l'une quelconque des revendications précédentes, **caractérisé en ce que** l'espace creux (5) comporte un raccord (12) traversant l'enveloppe extérieure (4) comportant une vanne d'arrêt (13) pour raccorder une pompe à vide et/ou un raccord (14) traversant l'enveloppe extérieure (4) pour brancher un capteur de pression (15).

6. Réservoir (1) selon l'une quelconque des revendications précédentes, **caractérisé en ce que** le volume de réservoir (2) comporte un dispositif d'alimentation (18) s'étendant verticalement à l'intérieur du volume de réservoir (2), raccordé au moins à un raccord (3) pour acheminer le fluide, le dispositif d'alimentation (18) comportant plusieurs ouvertures d'alimentation (19) disposées verticalement décalées l'une par rapport à l'autre, les ouvertures d'alimentation (19) étant orientées opposées à la direction de l'extrémité de montage (7) du châssis de support (6).

7. Réservoir (1) selon l'une quelconque des revendications précédentes, **caractérisé en ce que** le dispositif d'alimentation (18) est formé de tubes ronds ou carrés et la surface de section de chacune des ouvertures d'alimentation (19) est plus grande ou égale à la surface de section du dispositif d'alimentation (18).

8. Réservoir (1) selon l'une quelconque des revendications précédentes, **caractérisé en ce que** le réservoir (1) comporte une extension verticale supérieure à 1,5 m et traverse à l'état monté la cage d'un escalier.
